# FASCICULE DE BREVET EUROPEEN

(11) **EP 3 692 350 B1**
(45) Date de publication et mention de la délivrance du brevet: **16.07.2025**
(21) Numéro de dépôt: 18793255.3
(22) Date de dépôt: 05.10.2018
(51) Int. Cl.: G01J 11/00

(54) **PROCÉDÉ ET ENSEMBLE D'ANALYSE OPTIQUE D'UNE IMPULSION LASER ULTRA-BRÈVE**
VERFAHREN UND ANORDNUNG ZUR OPTISCHEN ANALYSE EINES ULTRAKURZEN LASERPULSES
METHOD AND ASSEMBLY FOR OPTICAL ANALYSIS OF AN ULTRASHORT LASER PULSE

(30) Priorité: 06.10.2017 FR 1759391
(43) Date de publication de la demande: 12.08.2020
(73) Titulaire: Femto Easy, 33600 Pessac (FR)
(72) Inventeur: DUBROUIL, Antoine, 33400 Talence (FR)
(74) Mandataire: Plasseraud IP
(86) Numéro de dépôt international: PCT/FR2018/052460
(87) Numéro de publication internationale: WO 2019/069037

(56) Documents cités:
- WO-A1-2017/037402
- IAN A. WALMSLEY ET AL: "Characterization of ultrashort electromagnetic pulses", ADVANCES IN OPTICS AND PHOTONICS, vol. 1, no. 2, 15 April 2009 (2009-04-15), pages 308, XP055484183, DOI: 10.1364/AOP.1.000308

## Description

### Domaine de l'invention

La présente invention est dans le domaine général de la mesure d'impulsions laser ultra-brèves.

Elle vise notamment un dispositif autocorrélateur optique monocoup pour l'analyse d'une impulsion laser ultra-brève, c'est-à-dire d'une impulsion ayant une durée de l'ordre de la picoseconde à la femtoseconde, en particulier pour la mesure de sa durée ou de son profil temporel.

Elle concerne également un ensemble et un procédé d'analyse optique d'une impulsion laser ultra-brève mettant en œuvre un tel dispositif autocorrélateur optique monocoup.

### Arrière-plan technologique

Il est connu de nombreuses applications des impulsions laser ultra-brèves dans les milieux scientifiques, industriels et médicaux.

A titre d'exemple, des impulsions laser ultra-brèves sont utilisées dans le domaine du micro-usinage (gravure, perçage, marquage, ...), notamment en micro-électronique ou dans l'horlogerie.

Ces impulsions laser ultra-brèves permettent ainsi de réaliser des gravures très précises et sans bavure, grâce à la puissance instantanée élevée délivrée dans chaque impulsion.

En chirurgie ophtalmique, les lasers femtosecondes sont mis en œuvre pour remodeler la courbure cornéenne de l'œil par la réalisation de découpes très précises et sans effet thermique sur la cornée.

Toutefois, ces applications demandent de maîtriser à la fois la quantité d'énergie et la puissance instantanée délivrée par chaque impulsion laser.

De nombreuses recherches ont donc été menées pour développer des dispositifs permettant de caractériser de manière fiable et rapide des impulsions laser ultra-brèves afin d'asseoir cette maîtrise.

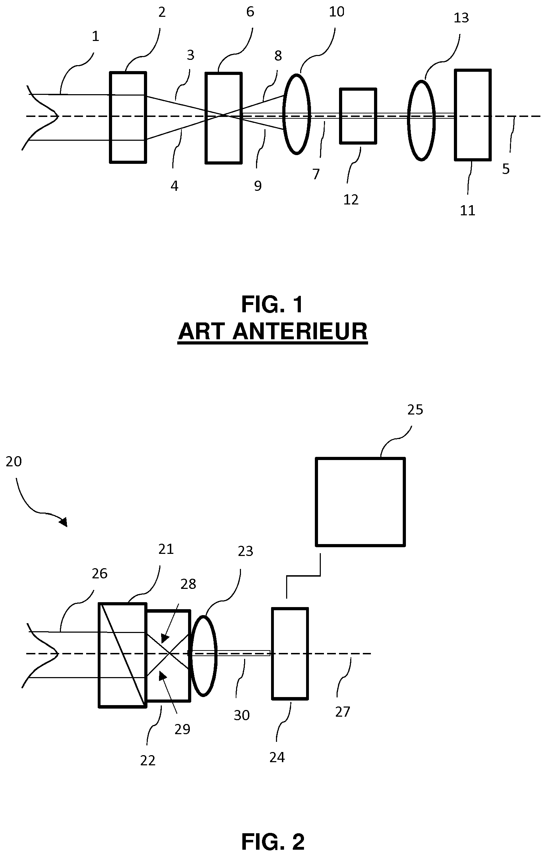

La Figure 1 illustre un autocorrélateur monocoup de l'état de l'art.

Cet autocorrélateur permet avantageusement de mesurer une trace d'autocorrélation à partir d'une seule impulsion laser ultra-brève, laquelle permet de caractériser la forme et la largeur temporelle de l'impulsion.

Un faisceau laser incident 1 à une fréquence optique fondamentale (ω) est envoyé sur un diviseur optique 2 qui sépare le faisceau laser incident 1 en deux faisceaux dits répliqués 3, 4, de fréquence optique fondamentale (ω).

Ces deux faisceaux répliqués 3, 4 se propagent suivant des directions différentes en sortie du diviseur optique 2, ces deux faisceaux 3, 4 se croisant selon un angle α non nul entre eux sur l'axe optique 5 du faisceau laser incident 1.

Un cristal optique non linéaire 6 de type 1, c'est-à-dire qui permet de générer un rayonnement à 2ω à partir de deux faisceaux de même polarisation, placé à l'intersection des deux faisceaux répliqués 3, 4, reçoit ces deux faisceaux 3, 4 en recouvrement au moins partiel de sorte que ces derniers interagissent de manière non linéaire dans ce cristal 6 pour donner naissance à des faisceaux 7-9 de fréquence optique égale au double (2ω) de la fréquence optique fondamentale (w) du faisceau laser incident 1.

Un filtre spectral 10 disposé entre le cristal optique non linéaire 6 et un détecteur 11 d'image tel qu'une caméra CCD, permet de bloquer les faisceaux laser de fréquence optique fondamentale (ω) se propageant suivant les directions des faisceaux lumineux répliqués 3, 4.

Un dispositif de formation d'image 12 tel qu'une lentille, forme l'image de la face de sortie du cristal optique non linéaire 6 sur ce détecteur 11 d'image. Ce dispositif de formation d'image 12 a ici un grandissement de un (1) mais pourrait présenter des grandissements supérieurs à un (1) afin d'améliorer la résolution de l'autocorrélateur, ce qui nécessiterait cependant d'éloigner d'autant plus le détecteur 11 du cristal optique non linéaire 6.

En sortie du cristal optique non linéaire 6, on observe, en conséquence:
- une trace d'autocorrelation 7 du faisceau laser incident 1 doublé en fréquence, aussi appelée trace d'autocorrélation d'ordre deux ayant une fréquence optique (2ω), et
- deux faisceaux 8, 9 de fréquence optique égale au double (2ω) de la fréquence optique fondamentale (ω) du faisceau laser incident 1, lesquels, se propageant suivant les directions des faisceaux répliqués 3, 4, seront appelés par la suite, « faisceaux latéraux doublés ».

Ainsi, et alors que la trace d'autocorrélation 7 d'ordre deux se propage suivant l'axe optique 5 du faisceau laser incident 1, les faisceaux latéraux doublés 8, 9 à la fréquence optique 2ω se propagent latéralement à cette trace d'autocorrélation 7 d'ordre deux de sorte que l'ensemble des faisceaux 7-9 à la fréquence 2ω, sont séparés spatialement.

Pour détecter une trace d'autocorrelation intensimétrique d'ordre 2, il est nécessaire de placer un filtre spatial 13 tel qu'un iris, au foyer du dispositif de formation d'image 12, ce filtre spatial 13 ne laissant passer que le faisceau central, ou trace d'autocorrélation 7 d'ordre deux, se propageant suivant l'axe de propagation 5 de l'impulsion laser incidente 1.

On constate ainsi que la mise en œuvre d'un dispositif de formation d'image 12, éventuellement présentant un grandissement supérieur à un (1), et d'un filtre spatial 13 rendent le montage d'un autocorrélateur optique monocoup de l'art antérieur encombrant.

Les appareils optiques intégrant un tel autocorrélateur optique monocoup de l'état de l'art, nécessitent donc un espace suffisant, qui n'est pas toujours disponible.

En outre, un tel montage nécessite un ajustement en position et un alignement précis des différents éléments optiques constitutifs de cet autocorrélateur optique monocoup.

Ces opérations peuvent être longues et pénibles pour l'opérateur.

Des exemples de tels autocorrélateurs sont par ailleurs donnés dans le document WO2017037402, et l'article "Characterization of ultrashort electromagnetic pulses" de Ian A. Walmsley et al., Advances in Optics and Phoconics, 2009.

Il existe donc un besoin pressant pour un nouvel autocorrélateur optique monocoup, qui permette de surmonter les inconvénients de l'art antérieur exposés ci-dessus.

### Objet de l'invention

La présente invention vise un dispositif autocorrélateur optique monocoup, simple dans sa conception et dans son mode opératoire, compact et robuste, répondant aux inconvénients ci-dessus mentionnés.

Un autre objet de la présente invention est un tel dispositif autocorrélateur optique monocoup présentant une réduction significative du nombre de composants à installer et à aligner, et par conséquent d'un temps de montage réduit tout en assurant une meilleure stabilité mécanique de ce dernier.

La présente invention vise également un procédé pour analyser une impulsion laser ultra-brève mettant en œuvre un tel dispositif autocorrélateur optique monocoup qui soit économique et fiable.

Encore un objet de la présente invention est un tel procédé fournissant de manière particulièrement aisée une mesure de trace Frog, c'est-à-dire une trace d'autocorrélation d'ordre deux résolue spectralement.

### BREVE DESCRIPTION DE L'INVENTION

A cet effet, l'invention concerne un dispositif autocorrélateur optique monocoup pour analyser une impulsion laser ultra-brève tel que défini dans la revendication 1.

Selon l'invention, ce dispositif autocorrélateur est constitué de:
a) un séparateur de polarisation pour séparer angulairement un faisceau de rayonnement laser incident de fréquence optique fondamentale (ω), en deux faisceaux de rayonnement laser de fréquence fondamentale (ω) et de polarisations linéaires orthogonales entre elles, lesdits deux faisceaux formant un angle α entre eux en sortie dudit séparateur, ledit angle α étant non nul de sorte que lesdits faisceaux se recouvrent au moins partiellement en sortie dudit séparateur,
b) un cristal non linéaire de type II, c'est-à-dire qui permet de générer un rayonnement à 2ω à partir de deux faisceaux de même polarisation perpendiculaires (doublage avec une seule polarisation impossible), ledit cristal non linéaire étant agencé pour recevoir lesdits faisceaux, issus dudit séparateur, en recouvrement au moins partiel de manière à générer en sortie dudit cristal un seul faisceau de rayonnement laser de fréquence harmonique (2ω), lequel est une trace d'autocorrélation d'ordre deux ayant une fréquence optique 2ω,
c) un système de détection résolu spatialement suivant au moins une direction,
d) au moins un dispositif de filtrage spectral configuré pour faire passer sélectivement ledit faisceau de rayonnement laser de fréquence harmonique (2ω) tout en bloquant lesdits faisceaux de rayonnement laser de fréquence fondamentale (w), ledit au moins un dispositif de filtrage étant placé entre ledit cristal non linéaire et ledit système de détection,
e) ledit cristal non linéaire, ledit au moins un dispositif de filtrage spectral et ledit système de détection étant agencés pour détecter une trace d'autocorrélation monocoup de type intensimétrique d'ordre deux à la fréquence optique double (2ω).

Ce dispositif autocorrélateur optique monocoup est compact en ce qu'il est uniquement composé des composants a), b), c), d) et e) ci-avant mentionnés, tout assurant une mesure rapide, aisée et précise de la fonction d'autocorrélation en intensité d'une impulsion laser ultra-brève, telle qu'une impulsion picoseconde ou femtoseconde.

L'impulsion laser ultrabrève que l'on cherche à analyser est polarisée linéairement à 45 degrés des axes du séparateur de polarisation afin de répartir l'énergie de manière égale sur chaque axe de polarisation. A défaut, on placera en amont du dispositif autocorrélateur, un moyen pour polariser linéairement la polarisation de ladite impulsion à 45 degrés des axes du séparateur de polarisation.

De manière avantageuse, la génération de seconde harmonique activée par polarisation croisée au moyen d'un cristal optique non linéaire de type II permet de générer un unique faisceau de rayonnement laser à la fréquence optique (2ω), lequel se propage suivant l'axe optique du faisceau laser incident, et par conséquent, de s'affranchir des faisceaux de rayonnement laser à la fréquence optique (2ω) se propageant selon les directions des faisceaux dits répliqués, lesquels sont encore appelés « faisceaux latéraux doublés ».

Il n'est ainsi plus nécessaire de disposer d'un filtre spatial tel qu'un iris, pour bloquer les faisceaux latéraux doublés afin de détecter une trace d'autocorrélation monocoup de type intensimétrique d'ordre deux à la fréquence optique double (2ω).

La mesure s'en trouve grandement simplifiée et l'interprétation de la courbe obtenue est directe car dépourvue d'interférences. On s'affranchit du bruit de fond causé notamment par ces deux faisceaux latéraux doublés.

Un tel montage optique confère ainsi une grande compacité et simplicité au dispositif autocorrélateur optique monocoup de l'invention. En particulier, étant dépourvu de dispositif de formation d'image tel qu'une lentille, il est particulièrement aisé à aligner.

Toutefois, l'absence de dispositif de formation d'image requiert un design original du dispositif autocorrélateur optique monocoup pour conserver la résolution de ce dernier. Cet objectif est ici atteint en plaçant le plan de détection au plus près du plan de conversion de fréquence, c'est-à-dire de la face de sortie du cristal non linéaire de type II. En effet, ledit cristal non linéaire est placé au plus à une distance d dudit plan de détection, d étant comprise dans l'intervalle ]0, 5] mm, de préférence dans l'intervalle ]0, 2] mm.

De manière avantageuse, il n'y a ainsi aucun alignement à réaliser dans le dispositif autocorrélateur optique monocoup et il suffit simplement d'introduire l'impulsion laser ultra-brève à analyser.

A titre purement illustratif, ce dispositif autocorrélateur optique monocoup peut comprendre un filtre spectral non résolu spatialement, i.e. un filtre spectral assurant un filtrage uniforme quel que soit la position du faisceau sur le filtre, et un filtre spectral résolu spatialement, encore appelé filtre spectral linéairement variable, le filtre spectral non résolu spatialement permettant d'absorber en partie la puissance du faisceau de rayonnement laser à la fréquence optique fondamentale (ω).

On entend par « en sortie dudit séparateur », à la sortie ou au voisinage de la face de sortie du séparateur de polarisation.

On entend par « cristal non linéaire de type II », un cristal configuré pour générer un faisceau de seconde harmonique (2ω) à partir de faisceaux incidents à la fréquence optique fondamentale (ω) et à polarisations croisées (o + e → e ou o).

Dans différents modes de réalisation particuliers de ce dispositif autocorrélateur optique monocoup, chacun ayant ses avantages propres et susceptibles de nombreuses combinaisons techniques possibles:
- ledit séparateur de polarisation est choisi dans le groupe comprenant un prisme de Wollaston, un prisme de babinet, un prisme de Rochon ou autre,
- ledit cristal non linéaire a une épaisseur comprise entre 5 microns, pour une impulsion femtoseconde et quelques 500 microns pour une impulsion picoseconde,
- ledit dispositif autocorrélateur optique monocoup est un élément pré-assemblé, au moins ledit cristal non linéaire de type II et ledit au moins un dispositif de filtrage spectral étant en contact optique. De manière avantageuse, l'ensemble des composants du dispositif autocorrélateur optique monocoup sont ainsi pré-assemblés entre eux pour former un seul bloc rendant sa manipulation très aisée.

Ce dispositif autocorrélateur optique monocoup est ainsi prêt à être monté dans un montage optique sans nécessiter d'alignement de ses composants et en présentant ainsi une meilleure stabilité mécanique.

Ces composants sont ici assemblés par collage mais ils pourraient encore être assemblés par tout autre moyen connu, et notamment au moyen de fixations mécaniques, par exemple par assemblage sur une platine ou au moyen de bagues.

Notons que de manière alternative, l'élément pré-assemblé pourrait être limité, ou constitué de, au séparateur de polarisation, au cristal non linéaire d'ordre II et audit au moins un dispositif de filtrage spectral. Cet élément pré-assemblé monobloc n'intégrerait ainsi pas directement de système de détection résolu spatialement suivant au moins une direction.
- l'ensemble constitué dudit séparateur de polarisation, dudit cristal non linéaire de type II et dudit au moins un dispositif de filtrage spectral sont placés dans une configuration en ligne en étant accolés. Ce montage assure avantageusement une compacité importante au dispositif autocorrélateur optique monocoup.
- ledit ou un desdits dispositifs de filtrage spectral présente une face de sortie évidée sur au moins une partie de son pourtour.

De manière avantageuse, il est ainsi possible de conférer à cette face de sortie du dispositif de filtrage spectral des dimensions et une forme assurant son emboitement dans le boîtier, ou corps, du système de détection pour placer cette face de sortie du dispositif de filtrage spectral au plus près du module de détection tel qu'une matrice de capteurs CCD ou CMOS, porté par le corps du système de détection.

A titre purement illustratif, le dispositif de filtrage spectral est un filtre multicouche ou un filtre de verre coloré.
- ledit système de détection comprend un détecteur matriciel ou encore un spectromètre imageur, ledit spectromètre imageur comportant une fente d'entrée, un système optique spectralement dispersif et un détecteur résolu spatialement suivant deux dimensions.

De préférence, le détecteur matriciel est un capteur matriciel CCD ou CMOS ayant une résolution micrométrique suivant une ou deux dimensions.

A titre d'exemple, le système optique spectralement dispersif comprend un réseau de diffraction en transmission ou en réflexion.

Alternativement, ledit ou un desdits dispositifs de filtrage spectral étant un dispositif de filtrage spectral linéairement variable, ledit système de détection est configuré pour détecter une trace frog, encore appelée trace d'autocorrélation monocoup d'ordre deux résolue spectralement.

Le système de détection est avantageusement un détecteur matriciel ayant une résolution micrométrique suivant deux dimensions.

Un tel dispositif de filtrage spectral offre une plus grande compacité tout en permettant un fonctionnement avec un alignement du montage optique moins critique que dans le cas du spectromètre imageur.

La présente invention concerne également un ensemble d'analyse optique pour analyser une impulsion laser ultra-brève comprenant un dispositif autocorrélateur optique monocoup tel que décrit précédemment.

Selon un aspect de cet ensemble d'analyse, cet ensemble comprend un dispositif atténuateur et/ou un polariseur pour définir la polarisation du faisceau en entrée du dispositif autocorrélateur et/ou un expanseur pour augmenter le diamètre du faisceau de rayonnement laser incident.

Un exemple de procédé pour analyser une impulsion ultra-brève mettant en œuvre un ensemble d'analyse optique tel que décrit précédemment contient les étapes suivantes :
- produire un premier faisceau de rayonnement laser et un second faisceau de rayonnement laser, lesdits faisceaux ayant chacun une fréquence optique fondamentale (ω) et présentant des polarisations linéaires orthogonales entre elles, lesdits faisceaux se propageant en formant un angle non nul entre eux,
   introduire lesdits premier et second faisceaux de rayonnement laser en recouvrement au moins partiel dans un cristal non linéaire de type II, ledit cristal étant configuré pour générer en sortie un seul faisceau de rayonnement laser de fréquence harmonique (2ω), lequel est une trace d'autocorrélation d'ordre deux ayant une fréquence optique 2ω,
- introduire les faisceaux de rayonnement laser sortant dudit cristal non linéaire dans au moins un dispositif de filtrage spectral, ledit au moins un dispositif de filtrage spectral étant configuré pour faire passer sélectivement le faisceau de rayonnement laser de fréquence harmonique (2ω) tout en bloquant les faisceaux de rayonnement laser de fréquence fondamentale (ω),
- introduire le faisceau de rayonnement laser de fréquence harmonique (2w) dans un système de détection résolu spatialement suivant au moins une direction, ledit cristal non linéaire, ledit au moins un dispositif de filtrage spectral et ledit système de détection étant agencés pour détecter une trace d'autocorrélation monocoup de type intensimétrique d'ordre deux à la fréquence optique double (2ω).

Selon un aspect de cet exemple de procédé, en sortie dudit cristal non linéaire, on introduit ledit faisceau de rayonnement laser de fréquence harmonique (2ω) dans un dispositif de filtrage spectral linéairement variable, de sorte qu'on obtient après détection, une trace frog, encore appelée trace d'autocorrélation monocoup d'ordre deux résolue spectralement.

Bien entendu, ce dispositif de filtrage spectral linéairement variable est adapté en résolution et en gamme spectrale.

De manière plus large, un autre exemple de réalisation ne faisant pas partie de la présente invention concerne aussi un dispositif autocorrélateur optique monocoup pour analyser une impulsion laser ultra-brève.

Selon l'invention, ce dispositif autocorrélateur comprend un dispositif de filtrage spectral linéairement variable et un détecteur matriciel résolu spatialement selon deux dimensions, ledit dispositif autocorrélateur étant configuré pour fournir une trace d'autocorrélation monocoup d'ordre supérieur à un (1), résolue spectralement.

A titre d'exemple, cette trace d'autocorrélation monocoup résolue spectralement peut être d'ordre deux (2) ou d'ordre trois (3) ou plus.

Le dispositif de filtrage spectral linéairement variable est placé directement avant le détecteur matriciel, dans le sens de propagation du faisceau laser incident.

Avec un tel dispositif, il est possible de mesurer une trace frog interférométrique ou intensimétrique. Dans ce dernier cas, le dispositif autocorrélateur optique monocoup comprendra également un filtre spatial.

De manière avantageuse, ce dispositif autocorrélateur optique monocoup comporte un moyen de séparation pour séparer un faisceau laser incident en deux faisceaux dits répliqués de fréquence optique fondamentale (ω), les deux faisceaux répliqués formant un angle α non nul entre eux de sorte qu'ils se recouvrent au moins partiellement en sortie de ce moyen de séparation.

De manière préférentielle, ce moyen de séparation peut être configuré pour assurer une séparation en polarisation ou en amplitude ou encore en front d'onde du faisceau laser incident.

Ce dispositif autocorrélateur optique monocoup comporte également un cristal non linéaire, lequel est agencé pour recevoir les faisceaux répliqués issus dudit moyen de séparation, en recouvrement au moins partiel. L'ordre du cristal non linéaire détermine l'ordre de la trace d'autocorrélation adressée sur l'ensemble formé par le dispositif de filtrage spectral linéairement variable et le détecteur matriciel résolue spatialement selon deux axes, ou encore selon deux dimensions. Il détermine ainsi également l'ordre de la trace Frog.

A titre d'exemple, ce cristal non linéaire peut ainsi être d'ordre deux (2) ou trois (3).

Un tel dispositif autocorrélateur optique monocoup présente avantageusement une grande sensibilité, tout étant simple à utiliser et compact, ce qui le rend aisément transportable.

Il est également possible de retirer le filtre spectral linéairement variable du faisceau pour mesurer une trace d'autocorrélation.

Un autre exemple ne faisant pas partie de l'invention concerne encore un dispositif autocorrélateur optique monocoup pour analyser une impulsion laser ultra-brève, ladite impulsion laser ultra-brève présentant un front d'onde collimaté et ayant une fréquence optique fondamentale (ω).

Selon cet exemple, ce dispositif est constitué de :
a) un composant optique à division de front d'onde disposé pour recevoir ledit front d'onde collimaté et pour diviser spatialement ce front d'onde collimaté en un premier front d'onde divisé se propageant suivant une première direction et en un second front d'onde divisé se propageant suivant une seconde direction formant un angle non nul avec la première direction,
b) un cristal optique non linéaire de type I, ledit cristal non linéaire étant agencé pour recevoir lesdits fronts d'onde, issus dudit composant optique à division de front d'onde, en recouvrement au moins partiel, ledit cristal optique non linéaire de type I ayant une face de sortie,
c) au moins un dispositif de filtrage spectral placé entre ledit cristal non linéaire de type I et un système de détection résolu spatialement suivant au moins une direction, ledit système de détection présentant un plan de détection, et
d) la face de sortie dudit cristal optique non linéaire étant placée à proximité du plan de détection du dispositif mais non confondu avec ce dernier, ledit cristal non linéaire, ledit au moins un dispositif de filtrage spectral et ledit système de détection étant agencés pour détecter une trace d'autocorrélation monocoup de type interférométrique d'ordre deux à la fréquence optique double (2ω).

Avec un tel dispositif, on mesure ainsi qu'une trace d'autocorrélation monocoup de type interférométrique d'ordre deux.

De préférence, au moins ledit cristal non linéaire de type I et ledit au moins un dispositif de filtrage spectral forment un ensemble préassemblé. De manière avantageuse, cet ensemble préassemblé contient également le composant optique à division de front d'onde. Il est ainsi possible d'interchanger cet ensemble avec un ensemble préassemblé constitué du séparateur de polarisation, du cristal optique non linéaire de type II et dudit au moins un dispositif de filtrage spectral, décrit plus haut pour obtenir de manière très aisée, soit une trace d'autocorrélation monocoup de type interférométrique d'ordre deux, soit une trace d'autocorrélation monocoup de type intensimétrique d'ordre deux.

De manière préférentielle, ledit système de détection ayant un plan de détection, ledit cristal non linéaire est placé au plus à une distance d dudit plan de détection, d étant compris entre ]0, 5] mm, c'est-à-dire d est compris entre 0 exclu et 5 mm, et encore mieux entre ]0, 2] mm.

Avantageusement, on pourra adjoindre à ce dispositif autocorrélateur, un système de traitement du signal configuré pour analyser la trace d'autocorrélation interférométrique monocoup d'ordre deux à la fréquence optique double (2ω) et pour en déduire une mesure de durée, de profil temporel et de spectre d'impulsion laser ultra-brève.

### BREVE DESCRIPTION DES DESSINS

D'autres avantages, buts et caractéristiques particulières de la présente invention ressortiront de la description qui va suivre, faite, dans un but explicatif et nullement limitatif, en regard des dessins annexés, dans lesquels:
- la Figure 1 est une représentation schématique d'un autocorrélateur optique monocoup de l'art antérieur;
- la Figure 2 représente schématiquement un dispositif autocorrélateur optique monocoup selon l'invention
- la Figure 3 est une vue partielle et élargie du dispositif autocorrélateur optique monocoup de la Fig. 2, montrant le cristal non linéaire, le dispositif de filtrage spectral et le détecteur ;
- la Figure 4 est une capture d'écran montrant un exemple de mesure effectuée avec le dispositif autocorrélateur optique monocoup de la Fig. 2, la partie gauche de cette figure comportant une image brute d'une trace d'autocorrélation monocoup intensimétrique d'ordre résolue spatialement et la partie droite représentant cette trace d'autocorrélation après analyse ;
- la Figure 5 est une vue élargie de l'image brute illustrée à la Fig. 4 ;

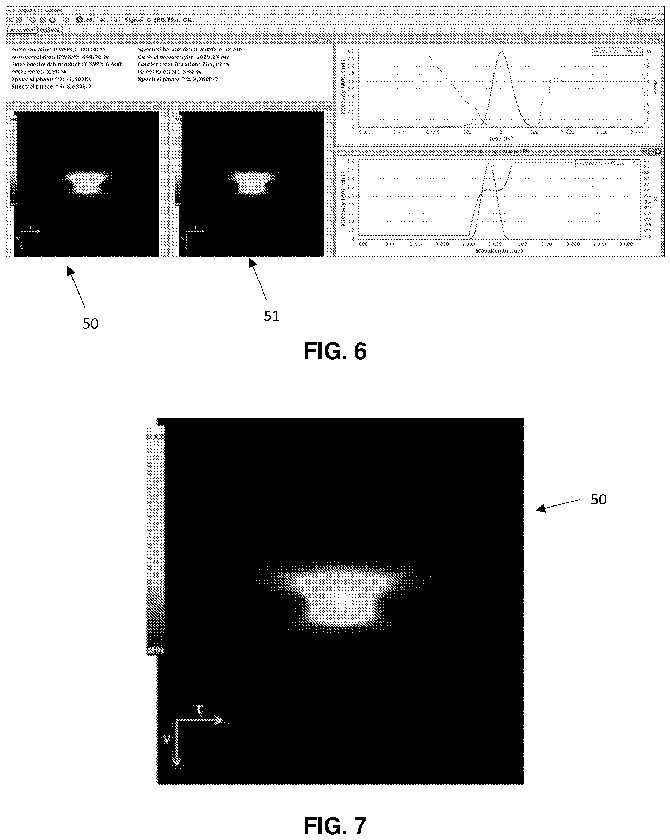

- la Figure 6 est une capture d'écran montrant un exemple de mesure réalisée avec un dispositif autocorrélateur optique monocoup selon un exemple ne faisant pas partie de la présente invention, ledit dispositif autocorrélateur intégrant un dispositif de filtrage spectral linéairement variable, la partie gauche de cette figure comportant une image brute d'une trace Frog résolue spatialement ainsi qu'une image d'une trace frog reconstituée par calculs en utilisant un algorithme itératif, la partie droite de cette figure représentant diverses courbes issues de l'analyse de cette trace Frog au moyen de l'algorithme itératif ;
- la Figure 7 est une vue élargie de l'image brute illustrée à la Fig. 6 ;
- la Figure 8 illustre une vue partielle et élargie d'un exemple de dispositif autocorrélateur optique monocoup, le dispositif spectral ayant été taillé pour être placé au plus près du plan de détection du détecteur ;
- la Figure 9 représente schématiquement un autre exemple de dispositif autocorrélateur optique monocoup, ce dispositif étant équipé d'un spectromètre imageur ;

### DESCRIPTION DETAILEE DE MODE DE REALISATION DE L'INVENTION

Tout d'abord, on note que les figures ne sont pas à l'échelle.

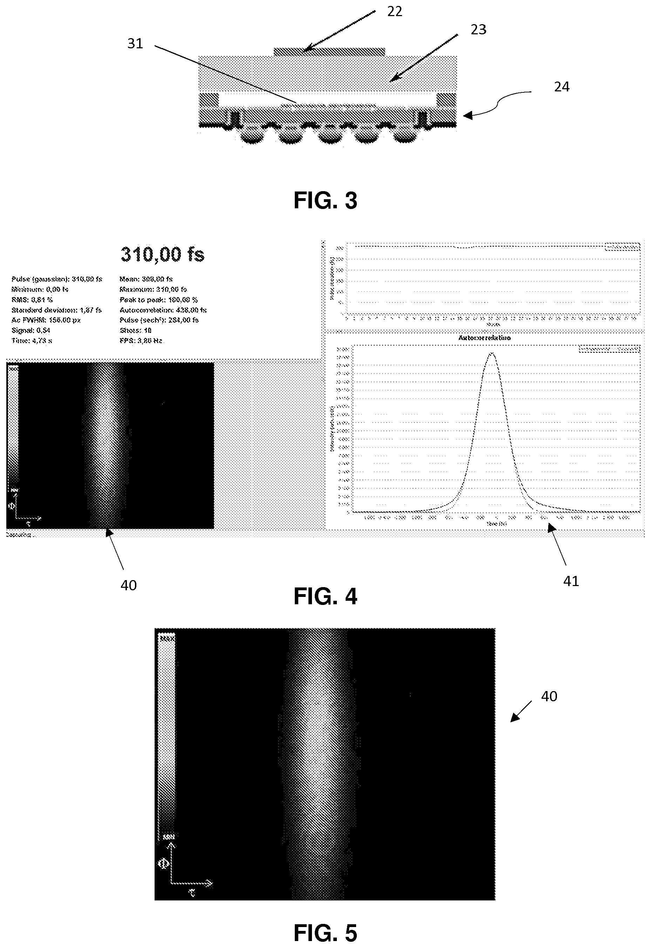

Les Figures 2 et 3 représentent schématiquement un dispositif autocorrélateur optique monocoup 20 selon un premier mode de réalisation de la présente invention.

Ce dispositif autocorrélateur optique monocoup 20 permet de mesurer la durée d'une impulsion laser ultra-brève sur la base d'une détection d'une autocorrélation intensimétrique.

Par la suite, on considérera une impulsion laser ultra-brève de fréquence fondamentale (ω) telle qu'une impulsion laser générée par une source laser femtoseconde.

Ce dispositif autocorrélateur 20 est constitué des seuls composants suivants :
- un séparateur de polarisation 21,
- un cristal non linéaire 22 permettant un accord de phase de type II,
- un dispositif de filtrage spectral 23, et
- un détecteur 24 ayant un plan de détection 31.

Ce détecteur 24 est avantageusement relié à une unité de traitement 25 comportant un processeur et, de préférence, un moyen de visualisation tel qu'un écran pour afficher les données traitées par ladite unité de traitement 25.

Les éléments de ce dispositif autocorrélateur 20 sont montés en ligne en étant reçus dans un boîtier. L'ensemble formé par le séparateur de polarisation 21, le cristal non linéaire de type II 22 et le filtre spectral 23 sont accolés. Le détecteur 24 est avantageusement placé à proximité immédiate du filtre spectral 23, ce qui confère à l'ensemble une grande compacité. En outre, en disposant ainsi le plan de détection 31 au plus près de la face de sortie du cristal non linéaire de type II 22, on garantit le maintien de la résolution du dispositif autocorrélateur.

Le faisceau incident 26 présente de manière avantageuse une distribution en intensité présentant une symétrie axiale par rapport à l'axe optique 27 de propagation de ce faisceau 26.

Le séparateur de polarisation 21 qui est ici un prisme de Wollaston, reçoit le faisceau incident 26 et sépare angulairement ce dernier en deux faisceaux 28, 29 de rayonnement laser de fréquence fondamentale (ω) et de polarisations linéaires orthogonales entre elles.

En sortie de ce séparateur 21, un premier faisceau 28 se propage suivant une première direction inclinée par rapport à l'axe optique 27 du faisceau incident 26 et un second faisceau 29 se propage suivant une seconde direction inclinée par rapport à l'axe optique 27 du faisceau incident 26. Les première et seconde directions sont inclinées de manière symétrique par rapport à l'axe optique 27.

Ce séparateur de polarisation 21 est ici configuré de sorte que l'angle a non nul formé entre les deux faisceaux 28, 29 ainsi générés assure le recouvrement au moins partiel de ces faisceaux 28, 29 dans le cristal optique non linéaire de type II 22 qui est accolé à la face de sortie du séparateur de polarisation 21.

Les faisceaux 28, 29 ainsi générés sont appelés les répliques du faisceau incident 26, ou encore faisceaux répliqués.

Ce cristal non linéaire de type II 22 est configuré pour assurer un doublage de fréquence du faisceau à la fréquence fondamentale ω. Ce cristal optique non linéaire 22 est par exemple un cristal BBO taillé avec un angle d'accord de phase θ = 42,4' ce qui permet de générer un doublage en fréquence pour une fréquence fondamentale ω correspondant à une longueur d'onde λ de 800 nm.

En sortie du cristal optique non linéaire de type II 22, on obtient une trace d'autocorrélation de l'impulsion laser incidente doublée en fréquence, aussi appelée trace d'autocorrélation d'ordre deux ayant une fréquence optique 2ω. Cette trace d'autocorrélation 30 se propage le long de l'axe optique 27 du faisceau incident 26.

Les deux faisceaux répliqués 28, 29 à la fréquence optique fondamentale ω étant également présents en sortie du cristal optique non linéaire de type II, un filtre spectral 23 est placé entre ce cristal optique non linéaire de type II 22 et le détecteur 24 pour filtrer ces deux faisceaux répliqués et ne laisser passer que ledit faisceau 30 de rayonnement laser de fréquence harmonique (2ω).

Ce filtre spectral 23 est ici accolé à la face de sortie du cristal optique non linéaire de type II 22. A titre d'exemple, ce filtre spectral est ici formé d'un filtre coloré tel qu'un verre coloré de type BG40.

Le détecteur 24 d'image reçoit ainsi uniquement la trace d'autocorrélation d'ordre 2 se propageant le long de l'axe optique 27 du faisceau laser indicent 26, ce qui permet de mesurer une trace d'autocorrélation monocoup intensimétrique d'ordre 2.

De manière avantageuse, le détecteur 24 est une caméra résolue spatialement suivant deux directions (X, Y) transverses à l'axe optique 27. Cette caméra est de préférence une caméra CCD ou CMOS fonctionnant à une fréquence de plusieurs dizaines à plusieurs centaines d'images/seconde. Elle est bien entendu adaptée en fonction de la gamme spectrale de l'impulsion à mesurer.

L'unité de traitement 25 connecté au détecteur 24 traite les mesures d'autocorrélation intensimétrique d'ordre deux.

Les Figures 4 et 5 montrent un exemple de mesure réalisée avec le dispositif autocorrélateur optique monocoup 20 illustré à la Fig. 2.

L'image 40 représentée dans la partie gauche de la Figure 4 et en vue élargie à la Figure 5, est une image brute d'une trace d'autocorrélation monocoup intensimétrique d'ordre II résolue spatialement.

L'axe des abscisses représente l'axe des temps (t) et l'axe des ordonnées représente le diamètre (^{ϕ}) du faisceau laser incident mesuré. Le faisceau laser incident présente une forme gaussienne dans sa dimension spatiale ainsi que dans sa dimension temporelle.

La courbe 41 représentée à droite de la Figure 4 est une représentation de l'intégration de la trace d'autocorrélation ainsi imagée sur l'ensemble de son diamètre, l'axe des abscisses représentant l'axe des temps (t) et l'axe des ordonnées représentant l'intensité mesurée.

De la courbe 41 ainsi obtenue et après analyse, on détermine la durée de l'impulsion laser incidente, qui est ici de 310 fs, pour une « durée gaussienne ».

Les Figures 6 et 7 illustrent un exemple de trace frog, ou trace d'autocorrélation monocoup d'ordre 2 résolue spectralement, obtenue avec un dispositif autocorrélateur comportant un filtre spectral linéairement variable.

La Figure 6 illustre une capture d'écran obtenue sur l'unité de traitement 25, la partie gauche de cette figure comportant une image 50 brute d'une trace frog résolue spatialement, ainsi qu'une image 51 simulée de cette trace frog obtenue par un algorithme itératif.

Cet algorithme itératif permet de déterminer les paramètres physiques de l'impulsion laser incidente en assurant la convergence de l'image 51 simulée vers l'image 50 brute acquise expérimentalement.

Sur la partie droite de cette figure 6 sont représentées diverses courbes issues de l'analyse de cette trace frog au moyen de l'algorithme itératif.

Sur la Figure 7, qui est une vue élargie de l'image 50 brute de la Fig. 6, l'axe des abscisses représente l'axe des temps (t) et l'axe des ordonnées, l'axe spectral (longueur d'onde A).

On observe que le filtre spectral linéairement variable a transformé l'axe spatial en axe spectral. Une longueur d'onde spécifique est donc transmise en fonction de la position spatiale.

Une telle trace Frog fournit ainsi une cartographie temps/spectre, laquelle permet via l'algorithme itératif de retrouver le profil temporel de l'impulsion, la phase spectrale et le spectre fondamental (ω).

De telles informations sur le faisceau laser incident ne seraient pas accessibles avec une trace d'autocorrélation monocoup intensimétrique.

La trace Frog permet à l'opérateur de déterminer les paramètres requis pour réduire la durée de l'impulsion.

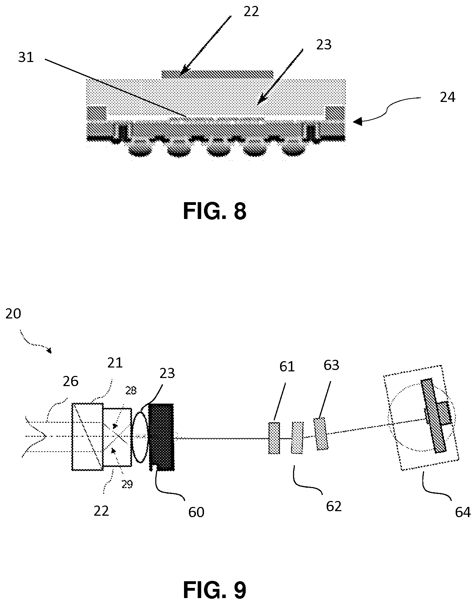

La Figure 8 est une vue partielle et élargie d'un dispositif autocorrélateur optique monocoup. Les éléments de la Figure 8 portant les mêmes références que ceux des Figures 2 et 3 représentent les mêmes objets, lesquels ne seront pas décrits de nouveau ci-après.

Le dispositif autocorrélateur de la Fig. 8 diffère de celui représenté sur les Fig. 2 et 3 en ce que la face de sortie du dispositif spectral 23 a été taillée pour placer ce dernier au plus près du plan de détection 31 du détecteur 24.

Toutefois, cette face de sortie du dispositif de filtrage spectral 23 n'est pas placée directement en contact avec ce plan de détection 31, ici formé par la surface externe du module de détection, pour éviter d'endommager cette dernière. Dans ce cas, le dispositif de filtrage spectral 23 remplace la fenêtre de protection du dispositif de détection (capteur CMOS ou CCD). La fenêtre faisant partie de la fabrication monobloc de ce type de capteur un procédé permettant de retirer la fenêtre sans endommager le capteur a été mis au point.

La Figure 9 représente schématiquement un dispositif autocorrélateur optique monocoup équipé d'un spectromètre imageur. Les éléments de la Figure 9 portant les mêmes références que ceux des Figures 2 et 3 représentent les mêmes objets, lesquels ne seront pas décrits de nouveau ci-après.

Ce spectromètre imageur comporte une fente d'entrée 60, une première lentille 61, un système optique spectralement dispersif 62, une seconde lentille 63 et un détecteur 64 résolu spatialement suivant deux dimensions.

A titre d'exemple, le système optique spectralement dispersif 62 comprend un réseau de diffraction en transmission.

La face de sortie du cristal non linéaire de type II 22 est placée avantageusement à proximité immédiate de la fente 60 d'entrée du spectromètre imageur.

## Revendications

1. Dispositif autocorrélateur optique monocoup pour analyser une impulsion laser ultra-brève, **caractérisé en ce qu'**il est constitué de :
a) un séparateur de polarisation (21) pour séparer angulairement un faisceau de rayonnement laser incident de fréquence optique fondamentale (ω), en deux faisceaux de rayonnement laser de fréquence fondamentale (ω) et de polarisations linéaires orthogonales entre elles, lesdits deux faisceaux formant un angle α entre eux en sortie dudit séparateur, ledit angle α étant non nul de sorte que lesdits faisceaux se recouvrent au moins partiellement en sortie dudit séparateur,
b) un cristal non linéaire (22) de type II, ledit cristal non linéaire (22) étant agencé pour recevoir lesdits faisceaux, issus dudit séparateur, en recouvrement au moins partiel de manière à générer en sortie dudit cristal un seul faisceau de rayonnement laser de fréquence harmonique (2ω), lequel est une trace d'autocorrélation d'ordre deux ayant une fréquence optique 2ω,
c) un système de détection (24) résolu spatialement suivant au moins une direction,
d) au moins un dispositif de filtrage spectral (23) configuré pour faire passer sélectivement ledit faisceau de rayonnement laser de fréquence harmonique (2ω) tout en bloquant lesdits faisceaux de rayonnement laser de fréquence fondamentale (ω), ledit au moins un dispositif de filtrage étant placé entre ledit cristal non linéaire (22) et ledit système de détection,
e) ledit cristal non linéaire (22), ledit au moins un dispositif de filtrage spectral (23) et ledit système de détection (24) étant agencés pour détecter une trace d'autocorrélation monocoup de type intensimétrique d'ordre deux à la fréquence optique double (2ω), et
f) le système de détection (24) ayant un plan de détection (31), ledit cristal non linéaire (22) est placé au plus à une distance d de ce plan de détection (31), d étant comprise dans l'intervalle ] 0, 5] mm.

2. Dispositif selon la revendication 1, **caractérisé en ce que** ledit séparateur de polarisation (21) est choisi dans le groupe comprenant un prisme de Wollaston, un prisme de babinet et un prisme de Rochon.

3. Dispositif selon l'une quelconque des revendications 1 ou 2, **caractérisé en ce que** ledit dispositif est un élément pré-assemblé, au moins ledit cristal non linéaire (22) de type II et ledit au moins un dispositif de filtrage spectral (23) étant en contact optique.

4. Dispositif selon l'une quelconque des revendications 1 à 3, **caractérisé en ce que** l'ensemble constitué dudit séparateur de polarisation (21), dudit cristal non linéaire (22) de type II et dudit au moins un dispositif de filtrage spectral (23) sont placés dans une configuration en ligne en étant accolés.

5. Dispositif selon l'une quelconque des revendications 1 à 4, **caractérisé en ce que** ledit ou un dispositif de filtrage spectral (23) présente une face de sortie évidée sur au moins une partie de son pourtour.

6. Dispositif selon l'une quelconque des revendications 1 à 5, **caractérisé en ce que** ledit système de détection (24) comprend un détecteur matriciel ou encore un spectromètre imageur, ledit spectromètre imageur comportant une fente d'entrée, un système optique spectralement dispersif et un détecteur résolu spatialement suivant deux dimensions.

7. Dispositif selon l'une quelconque des revendications 1 à 5, **caractérisé en ce qu'**il comprend un dispositif de filtrage spectral (23) linéairement variable, ledit système de détection étant configuré pour détecter une trace frog, encore appelée trace d'autocorrélation monocoup d'ordre deux résolue spectralement.

8. Ensemble d'analyse optique pour analyser une impulsion laser ultra-brève, **caractérisé en ce qu'**il comprend un dispositif autocorrélateur optique monocoup selon l'une quelconque des revendications 1 à 7.

9. Ensemble selon la revendication 8, **caractérisé en ce qu'**il comprend un dispositif atténuateur et/ou un polariseur et/ou un expanseur pour augmenter le diamètre du faisceau de rayonnement laser incident.

## Patentansprüche

1. Optische One-Shot-Autokorrelationsvorrichtung zur Analyse eines ultrakurzen Laserimpulses, **dadurch gekennzeichnet, dass** sie besteht aus:
a) einem Polarisationsseparator (21) zur winkelmäßigen Trennung eines einfallenden Laserstrahls mit optischer Grundfrequenz (w) in zwei Laserstrahlen mit Grundfrequenz (ω) und zueinander orthogonalen linearen Polarisationen, wobei die beiden Strahlen am Ausgang des Separators einen Winkel α bilden, wobei der Winkel α nicht null ist, so dass sich die Strahlen am Ausgang des Separators wenigstens teilweise überlappen,
b) einem nichtlinearen Kristall (22) vom Typ II, wobei der nichtlineare Kristall (22) dazu angeordnet ist, die Strahlen, die aus dem Separator stammen, in wenigstens teilweiser Überlappung zu empfangen, um am Ausgang des Kristalls einen einzigen Laserstrahl mit harmonischer Frequenz (2w) zu erzeugen, der eine Autokorrelationsspur zweiter Ordnung mit einer optischen Frequenz 2ω ist,
c) einem Detektionssystem (24), das in wenigstens einer Richtung räumlich aufgelöst ist,
d) wenigstens einer Spektralfiltervorrichtung (23), die dazu ausgebildet ist, den Laserstrahl mit harmonischer Frequenz (2w) selektiv durchzulassen, während sie die Laserstrahlen mit Grundfrequenz (w) blockiert, wobei die wenigstens eine Filtervorrichtung zwischen dem nichtlinearen Kristall (22) und dem Detektionssystem angeordnet ist,
e) wobei der nichtlineare Kristall (22), die wenigstens eine spektrale Filtervorrichtung (23) und das Detektionssystem (21) dazu angeordnet sind, eine One-Shot-Autokorrelationsspur vom Intensimetertyp zweiter Ordnung bei der doppelten optischen Frequenz (2w) zu detektieren, und
f) wobei das Detektionssystem (24) eine Detektionsebene (31) aufweist, wobei der nichtlineare Kristall (22) höchstens in einem Abstand d von dieser Detektionsebene angeordnet ist, der im Bereich von ]0,5] mm liegt.

2. Vorrichtung nach Anspruch 1, **dadurch gekennzeichnet, dass** der Polarisationsseparator (21) aus der Gruppe gewählt ist, die ein Wollaston-Prisma, ein Babinet-Prisma und ein Rochon-Prisma umfasst.

3. Vorrichtung nach einem der Ansprüche 1 oder 2, **dadurch gekennzeichnet, dass** die Vorrichtung ein vormontiertes Element ist, wobei sich wenigstens der nichtlineare Kristall (22) vom Typ II und die wenigstens eine Spektralfiltervorrichtung (23) in optischem Kontakt befinden.

4. Vorrichtung nach einem der Ansprüche 1 bis 3, **dadurch gekennzeichnet, dass** die aus dem Polarisationsseparator (21), dem nichtlinearen Kristall (22) vom Typ II und der wenigstens einen Spektralfiltervorrichtung (23) bestehende Einheit in einer Reihenkonfiguration nebeneinander angeordnet ist.

5. Vorrichtung nach einem der Ansprüche 1 bis 4, **dadurch gekennzeichnet, dass** die oder eine Spektralfiltervorrichtung (23) eine Ausgangsfläche aufweist, die auf wenigstens einem Teil ihres Umfangs ausgespart ist.

6. Vorrichtung nach einem der Ansprüche 1 bis 5, **dadurch gekennzeichnet, dass** das Detektionssystem (24) einen Matrixdetektor oder auch ein Bildspektrometer umfasst, wobei das Bildspektrometer einen Eingangsschlitz, ein spektral dispersives optisches System und einen zweidimensional räumlich aufgelösten Detektor umfasst.

7. Vorrichtung nach einem der Ansprüche 1 bis 5, **dadurch gekennzeichnet, dass** diese eine linear veränderliche Spektralfiltervorrichtung (23) umfasst, wobei das Detektionssystem dazu ausgebildet ist, eine Frog-Spur, auch als spektral aufgelöste One-Shot-Autokorrelationsspur zweiter Ordnung bezeichnet, zu detektieren.

8. Optische Analyseeinheit zur Analyse eines ultrakurzen Laserimpulses, **dadurch gekennzeichnet, dass** sie eine optische One-Shot-Autokorrelationsvorrichtung nach einem der Ansprüche 1 bis 7 umfasst.

9. Einheit nach Anspruch 8, **dadurch gekennzeichnet, dass** sie eine Dämpfungsvorrichtung und/oder einen Polarisator und/oder einen Expander umfasst, um den Durchmesser des einfallenden Laserstrahls zu vergrößern.

## Claims

1. A single-shot optical autocorrelator device for analyzing an ultrashort laser pulse, **characterized in that** it is made up of:
a) a polarity separator (21) for angularly separating an incident laser radiation beam with fundamental optical frequency (ω) into two laser radiation beams with fundamental frequency (ω) and linear polarities that are orthogonal to one another, said two beams forming an angle α between them at the output of said separator, said angle α being non-zero so that said beams at least partially overlap at the output of said separator;
b) a type-II non-linear crystal (22), said non-linear crystal (22) being arranged to receive said at least partially overlapping beams originating from said separator so as to generate, at the output of said crystal, a single laser radiation beam with harmonic frequency (2ω), which is a second-order autocorrelation trace having an optical frequency 2ω;
c) a spatially resolved detection system (24) in at least one direction,
d) at least one spectral filtering device (23) configured to selectively allow the passage of said laser radiation beam with harmonic frequency (2ω), while blocking said laser radiation beams with fundamental frequency (ω), said at least one filtering device being placed between said non-linear crystal (22) and said detection system (24),
e) said non-linear crystal (22), said at least one spectral filtering device (23) and said detection system (24) being arranged to detect a second-order intensimetric type single-shot autocorrelation trace at the double optical frequency (2ω), and
f) said detection system (24) having a detection plane (31), said non-linear crystal (22) is at most placed at a distance d from this detection plane (31), with d being comprised in the range ]0, 5] mm.

2. The device as claimed in claim 1, **characterized in that** said polarity separator (21) is selected from the group comprising a Wollaston prism, a Babinet prism and a Rochon prism.

3. The device as claimed in claim 1 or 2, **characterized in that** said device is a pre-assembled element, with at least said type-II non-linear crystal (22) and said at least one spectral filtering device (23) being in optical contact.

4. The device as claimed in any one of claims 1 to 3, **characterized in that** the assembly formed by said polarity separator (21), said type-II non-linear crystal (22) and said at least one spectral filtering device (23) is placed in an in-line, contiguous configuration.

5. The device as claimed in any one of claims 1 to 4, **characterized in that** said or a spectral filtering device (23) has a recessed output face on at least one portion of its periphery.

6. The device as claimed in any one of claims 1 to 5, **characterized in that** said detection system (24) comprises a matrix detector or even an imaging spectrometer, said imaging spectrometer comprising an inlet slit, a spectrally dispersive optical system and a spatially resolved two-dimensional detector.

7. The device as claimed in any one of claims 1 to 5, **characterized in that** it comprises a linearly variable spectral filtering device (23), said detection system being configured to detect a FROG trace, also called spectrally resolved second-order single-shot autocorrelation trace.

8. An optical analysis assembly for analyzing an ultrashort laser pulse, **characterized in that** it comprises a single-shot optical autocorrelator device as claimed in any one of claims 1 to 7.

9. The assembly as claimed in claim 8, **characterized in that** it comprises an attenuator device and/or a polarizer and/or an expander for increasing the diameter of the incident laser radiation beam.
